# EUROPÄISCHE PATENTSCHRIFT

(11) **EP 2 909 873 B1**
(45) Veröffentlichungstag und Bekanntmachung des Hinweises auf die Patenterteilung: **28.06.2017**
(21) Anmeldenummer: 13763052.1
(22) Anmeldetag: 17.09.2013
(51) Int. Cl.: H01M 10/625, H01M 10/6553, H01M 10/647, H01M 10/6556, H01M 10/6554, H01M 10/613, H01M 2/02, H01M 2/10, H01M 2/30, H01M 2/26

(54) **ENERGIESPEICHERZELLE UND ENERGIESPEICHERMODUL**
ENERGY STORAGE CELL AND ENERGY STORAGE MODULE
CELLULE ACCUMULATRICE D'ÉNERGIE ET MODULE ACCUMULATEUR D'ÉNERGIE

(30) Priorität: 18.10.2012 DE 102012218991
(43) Veröffentlichungstag der Anmeldung: 26.08.2015
(73) Patentinhaber: Bayerische Motoren Werke Aktiengesellschaft, 80809 München (DE)
(72) Erfinder: ENGEL, Florian, 81371 München (DE); LUSTIG, Robert, 81679 München (DE); SCHLEICHER, Andreas, 80798 München (DE); VETTER, Jens, 85241 Hebertshausen (DE)
(86) Internationale Anmeldenummer: PCT/EP2013/069194
(87) Internationale Veröffentlichungsnummer: WO 2014/060165

(56) Entgegenhaltungen:
- EP-A1- 2 104 121
- WO-A1-01/13448
- WO-A1-2009/110484
- WO-A2-02/17414
- US-A1- 2004 137 322
- US-A1- 2006 046 135

## Beschreibung

Vorliegende Erfindung betrifft eine Energiespeicherzelle sowie ein Energiespeichermodul, in dem mehrere der Energiespeicherzellen zusammengefasst sind. Die Energiespeicherzelle und das Energiespeichermodul dienen insbesondere der Energieversorgung des Antriebs eines Kraftfahrzeugs.

Herkömmliche Energiespeicherzellen weisen üblicherweise ein Gehäuse auf, in dem zumindest ein elektrochemisches Element aufgenommen ist. Das elektrochemische Element im Inneren des Gehäuses umfasst einen anodischen und einen kathodischen Anschluss. Diese beiden Anschlüsse werden durch das Gehäuse hindurch nach außen geführt und außerhalb des Gehäuses mit einem entsprechenden anodischen und kathodischen Stromabgriff verbunden. Der anodische und kathodische Stromabgriff sitzt auf der Außenfläche des Gehäuses. Üblicherweise umfasst das Gehäuse einen topfförmigen Grundkörper, den sog. "can". Dieser topfförmige Grundkörper ist mittels eines Deckels, der sog. "cap", verschlossen. Auf dem Deckel sitzt der anodische und kathodische Stromabgriff. WO 2009/110484 A1 offenbart eine derartige Energiespeicherzelle aus dem Stand der Technik. Es ist Aufgabe vorliegender Erfindung, eine Energiespeicherzelle und ein Energiespeichermodul anzugeben, die bei kostengünstiger Herstellung und Montage wartungsarm, betriebssicher und wirkungsgradoptimiert betrieben werden können. Insbesondere ist es Aufgabe vorliegender Erfindung, eine Energiespeicherzelle und zugehöriges Energiespeichermodul anzugeben, bei denen effektiv die Wärme aus den elektrochemischen Elementen nach außen abgeführt werden kann.

Die Lösung dieser Aufgabe erfolgt durch die Merkmale der unabhängigen Ansprüche. Die abhängigen Ansprüche haben vorteilhafte Weiterbildungen der Erfindung zum Gegenstand.

Somit wird die Aufgabe gelöst durch eine Energiespeicherzelle, umfassend ein elektrisch leitfähiges Gehäuse, zumindest ein im Gehäuse angeordnetes, elektrochemisches Element, einen anodischen Stromabgriff und einen kathodischen Stromabgriff. Im Inneren des Gehäuses ist das elektrochemische Element angeordnet. Dieses Element umfasst einen anodischen Anschluss und einen kathodischen Anschluss. Der anodische Stromabgriff sitzt außen auf dem Gehäuse und ist durch das Gehäuse hindurch direkt mit dem anodischen Anschluss des elektrochemischen Elementes verbunden. Der kathodische Stromabgriff sitzt ebenfalls außen am Gehäuse, ist jedoch nicht direkt mit dem kathodischen Anschluss des elektrochemischen Elementes verbunden. Erfindungsgemäß ist der kathodische Anschluss im Inneren des Gehäuses mit dem Gehäuse kontaktiert. Der kathodische Stromabgriff wiederum ist ebenfalls mit dem Gehäuse kontaktiert, so dass der Strom von dem kathodischen Anschluss über das elektrisch leitende Gehäuse zum kathodischen Stromabgriff fließt. Das Gehäuse umfasst zumindest drei Außenwandungen. Die erste Außenwandung ist von der zweiten Außenwandung beabstandet und die dritte Außenwandung ist so angeordnet, dass sie das Gehäuse verschließt und gleichzeitig die erste Außenwandung mit der zweiten Außenwandung verbindet. Der anodische Stromabgriff ist auf der ersten Außenwandung angeordnet. Der kathodische Stromabgriff ist ebenfalls auf der ersten Außenwandung angeordnet. Im Inneren des Gehäuses ist der kathodische Anschluss mit der zweiten Außenwandung direkt elektrisch und thermisch leitend verbunden. Der kathodische Anschluss im Inneren des Gehäuse, welcher das elektrochemische Element mit der zweiten Außenwandung verbindet, erfüllt gleichzeitig zwei Funktionen: der Stromfluss vom elektrochemischen Element über das Gehäuse zum kathodischen Stromabgriff wird gewährleistet. Gleichzeitig dient der kathodische Anschluss für eine direkte und sehr gut wärmeleitende Verbindung zwischen dem elektrochemischen Element und der zweiten Außenfläche. Erfindungsgemäß kann also die in dem elektrochemischen Element entstehende Wärme über ein metallisches Element, nämlich den kathodischen Anschluss, direkt an die zweite Außenfläche des Gehäuses abgeführt werden. Gleichzeitig ist dabei erfindungsgemäß sichergestellt, dass sich an der zweiten Außenfläche kein Stromabgriff befindet. Deshalb kann die zweite Außenfläche des Gehäuses optimal zur Kühlung der Energiespeicherzelle verwendet werden. Die Energiespeicherzelle wird vorzugsweise in einem Kraftfahrzeug verwendet und dient dort zum alleinigen oder unterstützenden Antrieb des Kraftfahrzeugs über einen Elektromotor.

Die erfindungsgemäße Energiespeicherzelle ermöglicht es, die Stromabgriffe sehr flexibel auf den verschiedenen Außenwandungen des Gehäuses anzuordnen. Dadurch können die Energiespeicherzellen in verschiedenster Weise zu Modulen zusammengefasst werden, so dass sich ein sehr modularer und platzsparender Aufbau ergibt. Gleichzeitig ist durch die optimale Kühlung ein betriebssicherer und wirkungsgradoptimierter Betrieb der Energiespeicherzellen möglich. Im Rahmen der Anmeldung wird meist von der Kühlung der Energiespeicherzellen gesprochen. Selbstverständlich ist es jedoch auch möglich, über die zweite Außenwandung und den kathodischen Anschluss Wärme zuzuführen.

Vorteilhafterweise ist vorgesehen, dass die erste Außenwandung des Gehäuses zumindest teilweise durch einen Deckel gebildet ist. Der anodische Stromabgriff wird bevorzugt auf dem Deckel angeordnet. Besonders bevorzugt befindet sich auch der kathodische Stromabgriff auf dem Deckel. Der Deckel ist insbesondere so groß ausgebildet, dass über die entsprechende Öffnung das elektrochemische Element in das Gehäuse eingesetzt werden kann. Wenn der kathodische Stromabgriff auf dem Deckel angeordnet ist, muss der Deckel zumindest teilweise elektrisch leitend sein und elektrisch leitend mit dem Rest des Gehäuses verbunden sein.

Vorteilhafterweise ist das Gehäuse prismatisch ausgebildet, so dass mehrere der Energiespeicherzellen sehr platzsparend aneinandergereiht werden können. Insbesondere handelt es sich um eine quaderförmige Ausgestaltung, wobei die erste Außenwandung parallel zur zweiten Außenwandung angeordnet ist. Bei einer zylindrischen Ausgestaltung des Gehäuses stehen die erste und zweite Außenwandung ebenfalls parallel und beabstandet zueinander, wobei die dritte Außenwandung die Mantelfläche darstellt.

Die äußere Fläche der zweiten Außenwandung ist bevorzugt elektrisch isoliert. Zur Isolierung wird hier vorzugsweise eine Folie verwendet. Die Folie sollte äußerst dünn sein und möglichst thermisch leitend ausgebildet sein. Erfindungsgemäß wird an der zweiten Außenwandung die Kühlvorrichtung angesetzt. Da Kühlvorrichtungen meist aus metallischen Werkstoffen ausgebildet sind, erfolgt hier vorteilhafterweise die elektrische Isolierung zwischen Kühlvorrichtung und zweiter Außenwandung.

Die Erfindung umfasst des Weiteren ein Energiespeichermodul, insbesondere für ein Kraftfahrzeug. Das Energiespeichermodul umfasst zumindest eine der soeben beschriebenen Energiespeicherzellen. Insofern gelten die im Rahmen der Energiespeicherzelle vorgestellten vorteilhaften Ausgestaltungen und Unteransprüche entsprechend auch für das Energiespeichermodul. Darüber hinaus umfasst das Energiespeichermodul eine Kühlvorrichtung mit einer Wärmeübertragungsfläche. Diese Wärmeübertragungsfläche der Kühlvorrichtung liegt flächig an der zweiten Außenwandung der Energiespeicherzelle an. Die vorteilhafte elektrische Isolierung durch die Folie ist bevorzugt zwischen der Wärmeübertragungsfläche und der zweiten Außenwandung angeordnet.

Bevorzugt ist vorgesehen, dass mehrere der Energiespeicherzellen gestapelt aneinander angeordnet sind, wobei die Wärmeübertragungsfläche einer gemeinsamen Kühlvorrichtung an den mehreren zweiten Außenwandungen der mehreren Energiespeicherzellen anliegt, so dass eine Kühlvorrichtung für mehrere Energiespeicherzellen genutzt werden kann.

In der Kühlvorrichtung ist bevorzugt eine Fluidführungsvorrichtung angeordnet. Mittels dieser Fluidführungsvorrichtung kann die Wärme von der Wärmeübertragungsfläche über das entsprechende Fluid nach außen abtransportiert werden.

Die Energiespeicherzelle ist bevorzugt als Lithium-Ionen-Akku ausgebildet.

Weitere Einzelheiten, Merkmale und Vorteile der Erfindung ergeben sich aus der nachfolgenden Beschreibung und den Figuren. Es zeigen:
- Figur 1: ein erfindungsgemäßes Energiespeichermodul mit mehreren erfindungsgemäßen Energiespeicherzellen gemäß einem Ausführungsbeispiel, und
- Figur 2: eine schematische Schnittansicht durch das erfindungsgemäße Energiespeichermodul gemäß dem Ausführungsbeispiel.

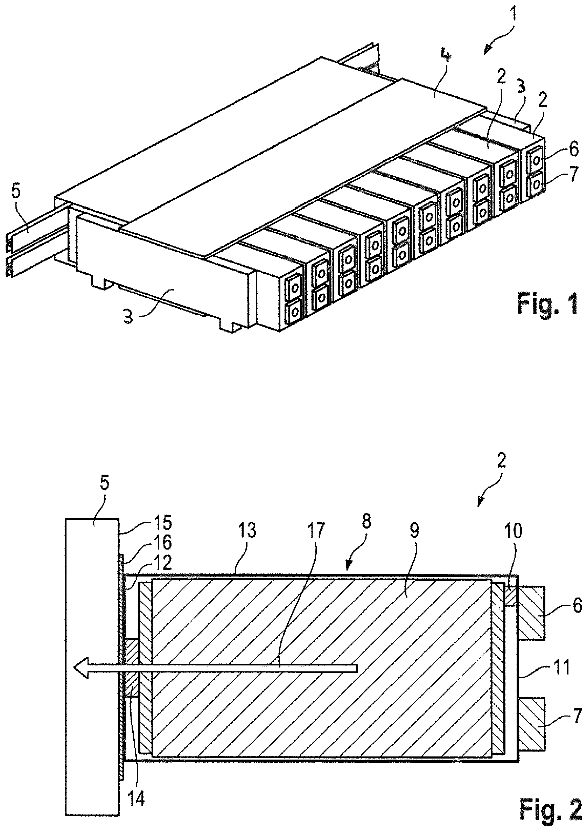

Anhand der Figuren 1 und 2 wird im Folgenden ein Ausführungsbeispiel eines Energiespeichermoduls 1 gezeigt. In dem Energiespeichermodul 1 sind mehrere Energiespeicherzellen 2 zusammengefasst. Das gezeigte Energiespeichermodul 1 dient zur Spannungsversorgung eines elektrischen Antriebs in einem Kraftfahrzeug.

Wie Fig. 1 zeigt, sind in dem Energiespeichermodul 1 mehrere prismatische Energiespeicherzellen 2 in einer Reihe nebeneinander gestapelt. Der Stapel aus Energiespeicherzellen 2 wird durch Druckplatten 3 und Zuganker 4 zusammengehalten. Die Zuganker 4 verbinden dabei die Druckplatten 3.

An jeder Energiespeicherzelle 2 ist ein anodischer Stromabgriff 6 und ein kathodischer Stromabgriff 7 ausgebildet. Des Weiteren umfasst das Energiespeichermodul 1 eine gemeinsame Kühlvorrichtung 5. Diese Kühlvorrichtung 5 liegt an der Rückseite aller Energiespeicherzellen 2 an.

Figur 2 zeigt in schematisch vereinfachter Darstellung einen Schnitt durch das Energiespeichermodul 1. Der Schnitt ist dabei durch eine der Energiespeicherzellen 2 gelegt.

Wie Figur 2 zeigt, umfasst die Energiespeicherzelle 2 ein Gehäuse 8. Das Gehäuse 8 ist gebildet durch eine erste Außenwandung 11, eine zweite Außenwandung 12 und eine dritte Außenwandung 13. Die gezeigte Energiespeicherzelle 2 ist quaderförmig ausgebildet, so dass die dritte Außenwandung 13 durch vier Außenflächen gebildet ist. Die erste Außenwandung 11 ist als Deckel ausgebildet und verschließt das Gehäuse 8.

Im Inneren des Gehäuses 8 ist ein elektrochemisches Element 9 angeordnet. Das elektrochemische Element 9 ist gewickelt aufgebaut. An dem elektrochemischen Element 9 befindet sich ein anodischer Anschluss 10 und ein kathodischer Anschluss 14.

Der anodische Anschluss 10 ragt durch die erste Außenwandung 11 hindurch und ist mit dem anodischen Stromabgriff 6 elektrisch leitend verbunden. Der kathodische Stromabgriff 7 sitzt gemeinsam mit dem anodischen Stromabgriff 6 auf der ersten Außenwandung 11. Allerdings ist der kathodische Anschluss 14 nicht direkt verbunden mit dem kathodischen Stromabgriff 7.

Wie Figur 2 zeigt, ist der kathodische Anschluss 14 direkt verbunden mit der zweiten Außenwandung 12 des Gehäuses 8. Dadurch, dass das Gehäuse 8 elektrisch leitend ausgebildet ist, fließt der Strom vom kathodischen Anschluss 14 durch das Gehäuse hindurch, im gezeigten Beispiel über die dritte Außenwandung 13, zum kathodischen Stromabgriff 7.

Die zweite Außenwandung 12 des Gehäuses 8 liegt direkt und flächig auf einer Wärmeübertragungsfläche 15 der Kühlvorrichtung 5 auf. Zwischen der zweiten Außenwandung 12 und der Wärmeübertragungsfläche 15 ist lediglich eine sehr dünne Folie 16 zur elektrischen Isolierung angeordnet.

Der kathodische Anschluss 14 stellt eine direkte thermische Verbindung zwischen dem elektrochemischen Element 9 und der zweiten Außenwandung 12 dar. Dadurch ist es möglich, mittels der Kühlvorrichtung 5 äußerst effektiv die Wärme aus dem elektrochemischen Element 9 abzuführen. Der sich ergebende Wärmepfad ist mit dem Bezugszeichen 17 schematisch eingezeichnet.

Gleichzeitig zu diesem optimalen Wärmepfad 17 erlaubt die direkte Kontaktierung des Gehäuses 8 über den kathodischen Anschluss 14 ein annähernd beliebiges Setzen des kathodischen Stromabgriffes 7 auf der Gehäuseoberfläche 8.

### Bezugszeichenliste

- 1: Energiespeichermodul
- 2: Energiespeicherzelle
- 3: Druckplatte
- 4: Zuganker
- 5: Kühlvorrichtung
- 6: anodischer Stromabgriff
- 7: kathodischer Stromabgriff
- 8: Gehäuse
- 9: elektrochemisches Element
- 10: anodischer Anschluss
- 11: erste Außenwandung
- 12: zweite Außenwandung
- 13: dritte Außenwandung
- 14: kathodischer Anschluss
- 15: Wärmeübertragungsfläche
- 16: Folie
- 17: Wärmeleitpfad

## Patentansprüche

1. Energiespeicherzelle (2), umfassend:
- ein elektrisch leitfähiges Gehäuse (8) mit zumindest einer ersten, zweiten und dritten Außenwandung (11, 12, 13), wobei die erste Außehwandung (11) von der zweiten Außenwandung (12) beabstandet ist, und wobei die dritte Außenwandung (13) die erste und zweite Außenwandung (11, 12) miteinander verbindet,
- zumindest ein im Gehäuse (8) angeordnetes, elektrochemisches Element (9) mit einem anodischen Anschluss (10) und einem kathodischen Anschluss (14),
- einen elektrisch leitend mit dem anodischen Anschluss (10) verbundenen anodischen Stromabgriff (6) auf der ersten Außenwandung (11), und
- einen elektrisch leitend mit der ersten oder dritten Außenwandung (11, 13) verbundenen kathodischen Stromabgriff (7), **dadurch gekennzeichnet,**
- **dass** der kathodische Anschluss (14) im Inneren des Gehäuses (8) direkt mit der zweiten Außenwandung (12) elektrisch und thermisch leitend verbunden ist, wobei der kathodische Stromabgriff (7) auf der ersten Außenwandung (11) sitzt, wobei der Stromfluss ausgehend von dem kathodischen Anschluss (14) über die zweite Außenwandung (12), die dritte Außenwandung (13) und die erste Außenwandung (11) zu dem kathodischen Stromabgriff (7) erfolgt.

2. Energiespeicherzelle nach Anspruch 1, **dadurch gekennzeichnet, dass** die erste Außenwandung (11) des Gehäuses (8) zumindest teilweise durch einen Deckel gebildet ist, wobei der anodische Stromabgriff (6) auf dem Deckel angeordnet ist.

3. Energiespeicherzelle nach Anspruch 2, **dadurch gekennzeichnet, dass** der kathodische Stromabgriff (7) auf dem Deckel angeordnet ist.

4. Energiespeicherzelle nach einem der vorhergehenden Ansprüche, **dadurch gekennzeichnet, dass** das Gehäuse (8) prismatisch, insbesondere quaderförmig, ausgebildet ist.

5. Energiespeicherzelle nach einem der vorhergehenden Ansprüche, **dadurch gekennzeichnet, dass** die erste Außenwandung (11) parallel zur zweiten Außenwandung (12) angeordnet ist.

6. Energiespeicherzelle nach einem der vorhergehenden Ansprüche, **dadurch gekennzeichnet, dass** eine Außenfläche der zweiten Außenwandung (12), vorzugsweise durch eine Folie (16), elektrisch isoliert ist.

7. Energiespeichermodul (1), insbesondere für ein Kraftfahrzeug, umfassend:
- zumindest eine Energiespeicherzelle (2) nach einem der vorhergehenden Ansprüche, und
- eine Kühlvorrichtung (5) mit einer Wärmeübertragungsfläche (15),
- wobei die Wärmeübertragungsfläche (15) an der zweiten Außenwandung (12) der Energiespeicherzelle (2) anliegt

8. Energiespeichermodul nach Anspruch 7, **dadurch gekennzeichnet, dass** mehrere der Energiespeicherzellen (2) gestapelt sind, wobei die Wärmeübertragungsfläche (15) der einen Kühlvorrichtung (5) an den zweiten Außenwandungen (12) der mehreren Energiespeicherzellen I2 anliegt.

9. Energiespeichermodul nach Anspruch 7 oder 8, **gekennzeichnet durch** eine Fluidführungsvorrichtung in der Kühlvorrichtung (5) zum Abführen der Wärme von der Wärmeübertragungsfläche (15).

## Claims

1. An energy storage cell (2), comprising:
- an electrically conductive housing (8) with at least a first, second and third outer wall (11, 12, 13), wherein the first outer wall (11) is spaced apart from the second outer wall (12), and wherein the third outer wall (13) connects the first and second outer walls (11, 12) together,
- at least one electrochemical element (9) arranged in the housing (8), with an anodic connection (10) and a cathodic connection (14),
- an anodic current tap (6), connected in electrically conductive manner to the anodic connection (10), on the first outer wall (11), and
- a cathodic current tap (7) connected in electrically conductive manner to the first or third outer wall (11, 13), **characterised in that**
- the cathodic connection (14) in the interior of the housing (8) is connected in electrically and thermally conductive manner directly to the second outer wall (12), the cathodic current tap (7) being located on the first outer wall (11), with the current flowing starting from the cathodic connection (14) via the second outer wall (12), the third outer wall (13) and the first outer wall (11) to the cathodic current tap (7).

2. An energy storage cell according to Claim 1, **characterised in that** the first outer wall (11) of the housing (8) is formed at least partially by a cover, the anodic current tap (6) being arranged on the cover.

3. An energy storage cell according to Claim 2, **characterised in that** the cathodic current tap (7) is arranged on the cover.

4. An energy storage cell according to one of the preceding claims, **characterised in that** the housing (8) is designed to be prismatic, especially cuboid.

5. An energy storage cell according to one of the preceding claims, **characterised in that** the first outer wall (11) is arranged parallel to the second outer wall (12).

6. An energy storage cell according to one of the preceding claims, **characterised in that** an outer surface of the second outer wall (12) is electrically insulated, preferably by a film (16).

7. An energy storage module (1), especially for a motor vehicle, comprising:
- at least one energy storage cell (2) according to one of the preceding claims, and
- a cooling device (5) with a heat transfer surface (15),
- wherein the heat transfer surface (15) lies against the second outer wall (12) of the energy storage cell (2).

8. An energy storage module according to Claim 7, **characterised in that** a plurality of the energy storage cells (2) are stacked, the heat transfer surface (15) of the one cooling device (5) lying against the second outer walls (12) of the plurality of energy storage cells (2).

9. An energy storage module according to Claim 7 or Claim 8, **characterised by** a fluid guidance device in the cooling device (5) for dissipating the heat from the heat transfer surface (15).

## Revendications

1. Cellule d'accumulation d'énergie (2) comprenant :
- un boîtier électriquement conducteur (8) ayant au moins une première, une seconde et une troisième parois externes (11, 12, 13), la première paroi externe (11) étant située à distance de la seconde paroi externe (12) et la troisième paroi externe (13) reliant la première et la seconde parois externes (11, 12),
- au moins un élément électrochimique (9) monté dans le boîtier (8) et équipé d'une borne anodique (10) et d'une borne cathodique (14),
- une prise de courant anodique (6) électriquement conductrice reliée à la borne anodique (10) et située sur la première paroi externe (11), et
- une prise de courant cathodique (7) électriquement conductrice reliée à la première ou à la troisième paroi externe (11, 13),
**caractérisée en ce que**
la borne cathodique (14) est directement reliée de façon électriquement et thermiquement conductrice à la seconde paroi externe (12), à la partie interne du boîtier (8), la prise de courant cathodique (7) étant située sur la première paroi externe (11), la circulation du courant s'effectuant de la borne cathodique (14) par la seconde paroi externe (12), la troisième paroi externe (13) et la première paroi externe (11) vers la prise de courant cathodique (7).

2. Cellule d'accumulation d'énergie conforme à la revendication 1,
**caractérisée en ce que**
la première paroi externe (11) du boîtier (8) est formée au moins en partie par un couvercle, la prise de courant anodique (6) étant située sur ce couvercle.

3. Cellule d'accumulation d'énergie conforme à la revendication 2,
**caractérisée en ce que**
la prise de courant cathodique (7) est située sur le boîtier.

4. Cellule d'accumulation d'énergie conforme à l'une des revendications précédentes,
**caractérisée en ce que**
le boîtier (8) est de forme prismatique, et en particulier de forme parallélépipédique.

5. Cellule d'accumulation d'énergie conforme à l'une des revendications précédentes,
**caractérisée en ce que**
la première paroi externe (11) est parallèle à la seconde paroi externe (12).

6. Cellule d'accumulation d'énergie conforme à l'une des revendications précédentes,
**caractérisée en ce que**
la surface externe de la seconde paroi externe (12) est de préférence isolée électriquement par un film (16).

7. Module d'accumulation d'énergie (1), en particulier destiné à un véhicule comprenant :
- au moins une cellule d'accumulation d'énergie (2) conforme à l'une des revendications précédentes, et
- un dispositif de refroidissement (5) ayant une surface de transfert de chaleur (15),
- la surface de transfert de chaleur (15) étant appliquée sur la seconde paroi externe (12) de la cellule d'accumulation d'énergie (2).

8. Module d'accumulation d'énergie conforme à la revendication 7,
**caractérisé en ce que**
plusieurs cellules d'accumulation d'énergie (2) sont empilées, la surface de transfert de chaleur (15) du dispositif de refroidissement (5) étant appliquée sur les secondes parois externes (12) des cellules d'accumulation d'énergie (2).

9. Module d'accumulation d'énergie conforme à la revendication 7 ou 8,
**caractérisé par**
un dispositif de guidage de fluide situé dans le dispositif de refroidissement (5) pour permettre la dissipation de la chaleur par la surface de transfert de chaleur (15).
